# EUROPEAN PATENT APPLICATION

(11) **EP 4 775 341 A1**
(43) Date of publication of application: **15.07.2026**
(21) Application number: 25150618.4
(22) Date of filing: 08.01.2025
(51) Int. Cl.: B23D 61/12

(54) **A BAND SAW BLADE WITH A NOVEL TOOTH AND A METHOD OF GRINDING SAME**

(71) Applicant: Luja Hansen, Soren, 5000 Odense C (DK)
(72) Inventor: Luja Hansen, Soren, 5000 Odense C (DK)
(74) Representative: Patrade A/S

(57) **Abstract**

A band saw blade comprises a plurality of spaced apart teeth. The teeth of the band saw blade comprises a tip with a free tip edge, a tooth face and a tooth back. The tip extends via a gullet into the tooth back of the subsequent tooth. The tip comprises that the free tip edge extends into a first section with a first tooth face part of the tooth face, which first face section extends via an intermediate step into a second section with a second tooth face part of the tooth face offset the first tooth face part. The first tooth face part has a first hook angle, and the second tooth face part has a second hook angle, which second hook angle is different from the first hook angle.

## Description

The present invention is directed to band saw blades, in particular, but not exclusively, band saw blades for large band saws for cutting wood, such as cutting timber, logs and trunks at timber mills.

The band saw blade of the present invention is of the kind comprising a plurality of spaced apart teeth, wherein a tooth of the band saw blade comprises a tip with a free tip edge, and a tooth face, which tip extends via a gullet into a tooth back of the subsequent tooth, and wherein the tip comprises a first section with a first tooth face part, and a second section with a second tooth face part.

One known kind of a tooth of a band saw blade is conventionally known as a "winter tooth". The term "winter tooth" is used within the art of wood-cutting for a saw blade tooth made for cutting frozen timber to help clean out the sawdust so it does not stick to the cutting boards and/or the timber. Known "winter teeth" always have parallel first and second tooth face parts and thus identical first and second hook angles. Emphasis is made that a winter tooth can be used throughout the year, but due to production costs the wood cutting industry tends to only use saw blade with winter teeth during wintertime.

The hook angle is defined as the angle between a tooth face and a line perpendicular to a baseline of the saw blade. The hook angle is thus the amount of forward or backward lean of a tooth. The parallel first and second tooth face of the winter tooth has forward lean.

Hook angles have large effects on cutting resistance, chip disposal, cutting temperature and saw blade life. Exemplary conventional band saw teeth typically have a hook angle of about 10° - 30°. Increasing the hook angle in the positive direction improves sharpness, but typically at the costs of decreased lifetime of sharpness. The lower the hook angle becomes, the more force and power is required to drive the tooth through the workpiece, and the wood fibers tend to be torn rather than cut. On the other hand the higher the hook angle becomes the sharper the first sections are, which makes it easier to drive the tooth/teeth through the workpiece, but at the costs of a fragile and less durable tooth.

Within the scope of the present invention the term "band saw blade" includes the blank, any intermediate products that eventually results in the final operative band saw blade ready to be placed in operative condition on a band saw, as well as new and used band saw blades, in particular band saw blades intended for being used on a large band saw for processing of logs and timber blocks. Circular saw blades are not within the scope of the present invention.

It is main aspect of the present invention to provide alternative designs of teeth of band saw blades.

It is a further aspect of the present invention to provide a band saw blade with a tooth having the advantages of both high and low hook angles.

It is a further aspect of the present invention to provide a band saw blade with improved ability to cut smoothly through the wood.

It is a further aspect of the present invention to provide a band saw blade, which has an improved ability to remove saw chips and saw dust.

The novel and unique features whereby these and other aspects are achieved according to the present invention consists in that
- the first tooth face part has a first hook angle and the second tooth face part has a second hook angle, which second hook angle is different from the first hook angle,
   or in that
- the first tooth face part has a first hook angle and the second tooth face part has a curvature that at least partly undercuts the first tooth face part,
whereby the first tooth face and the second tooth face becomes non-parallel.

Within the scope of the present invention the term "first section" means the upmost part of the tip of the tooth that makes the actually cutting through the workpiece. The free tip edge of the first section is the part of the tooth that hits the workpiece first and is responsible for starting breaking cutting the wood fibers and is the majority of the cutting zone.

Within the scope of the present invention the term "second section" means a part of the tip arranged closer to the gullet than the first section. The "second section" contributes a.o. in the progress of the band saw blade through the workpiece.

The first hook angle of the first tooth face part of the first section advantageously serves to cross-cut the wood fibers of the workpiece, as well as to make a clean cut. Saw dust and saw chips is guided towards the second hook angle during cutting, so that this material only accumulates temporarily in the upper part of the profiled tooth at a minimum level and in a short period. Most of the produced saw dust and saw chips will automatically be pushed or thrown out of the upper part of the gullets.

Due to the tooth design of the present invention with different hook angles of the first section and of the second section the strength of such a tooth, and the durability of its sharpness, is increased compared to known band saw blade teeth.

The second tooth face part and the first tooth face part can in preferred embodiments be offset each other by at least one intermediate step that can, but need not, take active part in the cutting process, whereby a long tooth face with sections with different properties can be obtained. The combination of different properties may be beneficial when passing a tooth through a workpiece.

The at least one intermediate step can be arranged at any convenient angle between adjacent sections, e.g. the first section and the second section, including acute, right or blunt angles. The at least one intermediate step protrudes from the section above it, e.g. the first section with the first tooth face part, to thereby offset the subsequent section below, e.g. offset the second section with the second tooth face part, from the previous section, and arrange the first tooth face part and the second tooth face part angled in relation to each other, thus their respective planes are not parallel.

The overall tooth face of the tip may in some embodiments comprise more than one intermediate steps in extended sequence in-between the first section and the second section. The number of intermediate steps may be at least 2, 3, 4, 5 or 6. All intermediate steps may or may not have same angling.

I some embodiments the second tooth face part extends directly from the first tooth face part without the presence of an intermediate step. The first tooth face part and the second tooth face part are in such embodiments also angled in relation to each other so that their respective planes are not parallel.

To provide a strong, durable and stable band saw blade, which is fast-feeding without being excessive aggressive the first tooth face part may in a preferred embodiment have a positive first hook angle and the second tooth face part may have a positive second hook angle, wherein the positive first hook angle can be higher than the positive second hook angle.

Thereby is obtained improved guidance of the wood sawdust that are created during cutting through the workpiece, e.g. timber, into and directly out of the associated gullet. The higher the first hook angle becomes the more capable the tooth is in attacking and cutting through the workpiece, e.g. through timber, with a minimum power consumption.

Furthermore said first tooth face part with a positive first hook angle that is higher than the positive second hook angle contributes to performing the cut without the band saw blade looses its stability during cutting. Yet an advantage is that with a tooth face that includes tooth face parts with a positive first hook angle that is higher that the positive second hook angle, the combined cutting angle and/or cutting radius of the combined first and second tooth face parts can be increased in the cutting zone of the tooth, without loosing the stability of the band saw blade, and of the strength of the tip/tooth.

In some embodiments the first tooth face part can have a positive first hook angle and the second tooth face part can have a zero or negative second hook angle, to thereby inhibit the tendency of the band saw blade to "climb" the material being cut. The negative second hook angle has backwards lean, thus leans forward from the intermediate step, to counteract the positive first hook angle that has forward lean and overhangs the intermediate step to break the wood fibers. These designs of a band saw tooth of the present invention have a highly improved capability to scrape the wood during cutting, whereby a clean finish can be obtained. Emphasize is made that within the scope of the present invention a positive first hook angle is also higher than a zero or negative second hook angle.

Optionally, in embodiments of teeth wherein the second tooth face part can have a zero or negative second hook angle, the at least one intermediate step may extend into a third section having a positive third hook angle. The third section may extend into the gullet.

The free tip edge may advantageously protrude beyond the plane of the second tooth face part, be in the plane of the second tooth face part, or the free tip edge may be retracted from the plane of the second tooth face part.

So in a preferred embodiment the first hook angle is selected to arrange the free tip edge of the tip of the tooth to extend beyond a line that extends perpendicular to a base line of a saw blade base of the band saw blade, and through a free end of the intermediate step, and wherein said free tip edge of the tip does not intersect, or is in, a plane including the second tooth face part.

Or in an alternative preferred embodiment the first hook angle can be selected to arrange the free tip edge of the tip to protrude beyond a line that extends perpendicular to a base line of a saw blade base and through a free end of the intermediate step, and wherein a plane including the first tooth face part does intersect a plane including the second tooth face part to thereby increase the size of the combined hook angles more than for the tooth embodiment described just above this one.

Both the above embodiments combine the advantages of the conventional band saw tooth having a high hook angle with the advantages of the conventional band saw tooth with lower hook angle in one and the same efficient universal band saw tooth.

According to the present invention the second section can be substantially retracted from the first section, e.g. if the second tooth face part has a curvature that at least partly undercuts the first tooth face part.

An upright protrusion or a plateau may be provided at the free tip edge spaced from said free tip edge. An upright protrusion or a plateau advantageously slows down the tooth's ability to pull the wood against it.

The tooth of the present invention may advantageously be provided with a hard material tipping as the strength of these hard materials makes the tip more resistant to wear, thereby prolonging lifetime of said tooth and prolonging the periods between grindings for sharpening the teeth and maintenance of the band saw blade. Suitable hard tipping materials include, but are not limited to, carbide and Stellite. "Stellite" is a registered trademark of Kennametal Inc. and is used in association with cobalt-chromium alloys.

Tooth profiles of the present invention can be side grinded like known profiles, however in some embodiments the side grinding angle can be decreased to increase the ability of the tooth to make a fine surface of the cut even with a high cut per tooth.

The teeth of the present invention can be provided with any top profile, tooth height and tooth pitch. All kinds of tooth top profiles are within the scope of the present invention. Furthermore, the teeth of the band saw blade may be the same or different and be combinations of the teeth according to the present invention with known teeth in any desired order and sequence.

The tooth profiles of the present invention can advantageously be made using the methods and sharpening tools described in the applicant's co-filed European patent application entitled "Methods of profile sharpening the teeth of a band saw blade; grinding heads and profile sharpening machine for use in the methods". The European patent application number is yet to be received.

These methods comprises the steps of
- providing a grinding tool having at least one grinding head configured with a grinding profile with at least one grinding surface part,
- arranging the rotation axis of the at least one grinding head at an angle ≥ 0 in relation to a base line of the band saw blade,
- selecting an insertion direction of the grinding head, which insertion direction provides an insertion angle of the grinding head in relation to a line perpendicular to the base line of the band saw blade, which insertion angle is different from at least one hook angle of the tooth face of the at least one tooth to be ground and/or obtained, and displacing the at least one grinding head, either along the insertion direction or perpendicular to the width of the band saw blade, into a space between two adjacent teeth of the band saw blade to achieve a grinding start position, and
- operating the grinding tool to grind at least the tooth face of the at least one tooth by continuously displacing the grinding head in the insertion direction.

In these methods the grinding head arrives at the grinding starting point, which is the closest possible "0 position" at the bottom of the above-mentioned space just before the grinding profile of the grinding head physically engages the band saw blade to actually start grinding.

In such an inventive method of profile sharpening, sharpening can be made in a single grinding step in contact with the tooth, by using a profiled grinding head with a grinding profile that matches the tooth profile to be obtained. The grinding head is placed into the space between adjacent teeth before grinding actually starts.

The present invention will be described below with references to the drawing in which:
Fig. 1 is a perspective side view of a fragment of a conventional band saw blade having a winter tooth,
Fig. 2 shows the same from the side in an enlarged scale view,
Fig. 3 is an enlarged scale view of the encircled detail of fig. 2,
Fig. 4 is a perspective side view of a fragment of a first embodiment of a band saw blade with a first embodiment of a tooth according to the present invention,
Fig. 5 shows the same from the side in enlarged scale view,
Fig. 6 is an enlarged scale view of the encircled detail of fig. 5,
Fig. 7 is a fragmentary enlarged scale view of the top of the tip of the tooth seen in figs. 4, 5 and 6,
Fig. 8 is a perspective side view of a fragment of a second embodiment of a band saw blade with a second embodiment of a tooth according to the present invention,
Fig. 9 shows the same from the side,
Fig. 10 is a fragmentary enlarged scale view of the top of the tip of the tooth seen in fig. 8 and encircled in fig. 9,
Fig. 11 shows schematically, in a side view, the profile of a fragment of a third embodiment a tooth according to the present invention,
Fig. 12 shows schematically, in a side view, a fragment of a fourth embodiment of a band saw blade with a fourth embodiment of a tooth according to the present invention,
Fig. 13 is an enlarged scale view of the encircled fragment of the fourth embodiment of a tooth seen in fig. 12,
Fig. 14 shows schematically, in a side view, a fragment of a fifth embodiment of a band saw blade with a fifth embodiment of a tooth according to the present invention,
Fig. 15 is an enlarged scale view of the encircled fragment of the fifth embodiment of a tooth seen in fig. 14,
Fig. 16 shows schematically, in a side view, a fragment of a sixth embodiment of a band saw blade with a sixth embodiment of a tooth according to the present invention,
Fig. 17 is an enlarged scale view of the encircled fragment of the sixth embodiment of a tooth seen in fig. 16,
Fig. 18 shows schematically, in a side view, a fragment of a seventh embodiment of band saw blade with a seventh embodiment of a tooth according to the present invention,
Fig. 19 is an enlarged scale view of the encircled fragment of the seventh embodiment of a tooth seen in fig. 18,
Fig. 20 shows schematically, in a side view, a fragment of an eight embodiment of a band saw blade with an eight embodiment of a tooth according to the present invention,
Fig. 21 is an enlarged scale view of the encircled fragment of the eight embodiment of a tooth seen in fig. 20,
Fig. 22 shows schematically, in a side view, a fragment of an ninth embodiment of a band saw blade with a ninth embodiment of a tooth according to the present invention, and
Fig. 23 is an enlarged scale view of the encircled fragment of the ninth embodiment of a tooth seen in fig. 22.

For illustrative purposes, and to emphasize the relations between respective sections, respective tooth faces and associated hook angles, the respective interior and exterior angles between the respective first sections, second sections and respective intermediate steps, are shown in the figures without any curvature. Sharp-edged embodiments are within the scope of the present invention, but curved or chamfered interior and/or exterior angles are as well, and may be preferred. The radius of curvature depends on amongst other the available grinding head, the purpose of the band saw blade, and the material of the band saw blade. Curved corners can also be a result of wear during operation of the band saw blade, in particular at exposed interior and/or exterior corners.

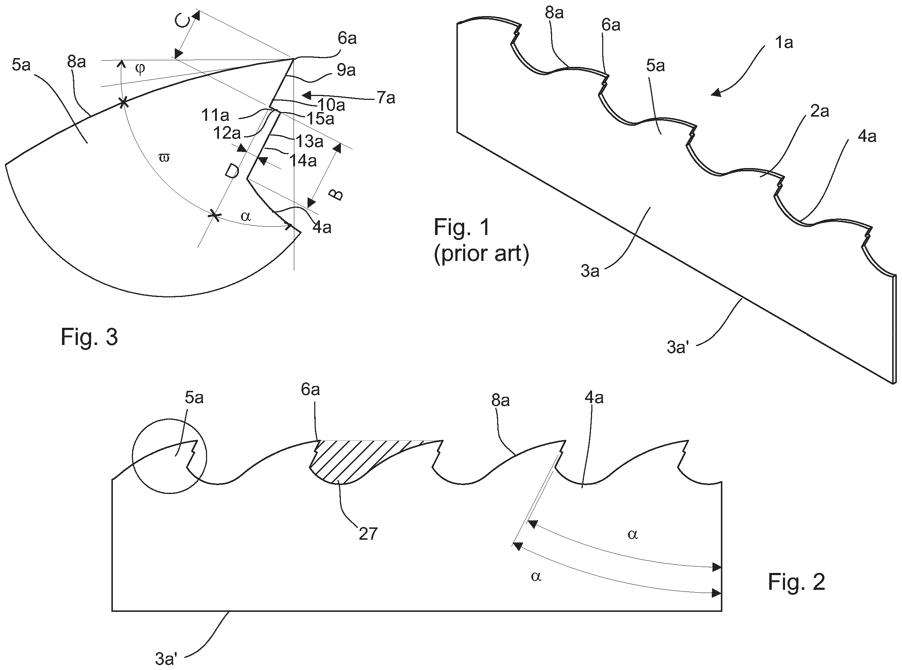

Figs. 1, 2 and 3 show a conventional band saw blade with known winter teeth, and illustrate that such winter teeth have parallel tooth face parts.

In the fragment of a known band saw blade 1a seen in figs. 1, 2 and 3 five identical winter teeth 2a are shown protruding from a saw blade base 3a having a saw blade base line 3a', and associated gullets 4a in-between the winter teeth 2a. The hatching in fig. 2 illustrates the volume that potentially can accommodate saw chips and saw dust during cutting.

As seen best in fig. 3 of the encircled winter tooth 2a in fig. 2, a winter tooth 2a has a tip 5a, which tip 5a has a tooth back 8a, a free tip edge 6a, and an overall tooth face 7a.

The free tip edge 6a at the top of the tip 5a extends into a first section 9a with a first tooth face part 10a. The first section 9a extends via an intermediate step 11a with an intermediate tooth face 12a into a second section 13a with a second tooth face part 14a, which second section 13a extends into the gullet 4a. The first section 9a, the intermediate step 11a and the second section 13a together expose the overall tooth face 7a for cutting through a workpiece. The intermediate step 11a has an exterior corner edge 15a.

The second tooth face part 14a is offset the first tooth face part 10a by the depth D of the intermediate step 11a.

The first tooth face part 9a and the second tooth face part 14a have the same hook angle α, thus the first tooth face part 9a and the second tooth face part 14a are parallel.

The first tooth face part 9a has a height C that is shorter than the height B of the second tooth face part 14a, and the first tooth face part 9a is offset the second tooth face part 14a by a depth D of the intermediate step 11a. The first hook angle and the second hook angle have identical size. In this exemplary embodiment of a winter tooth the first hook angle and the second hook angle α are both 27°, the clearance angle φ is about 10°, and the sharpness angle ω is about 53°.

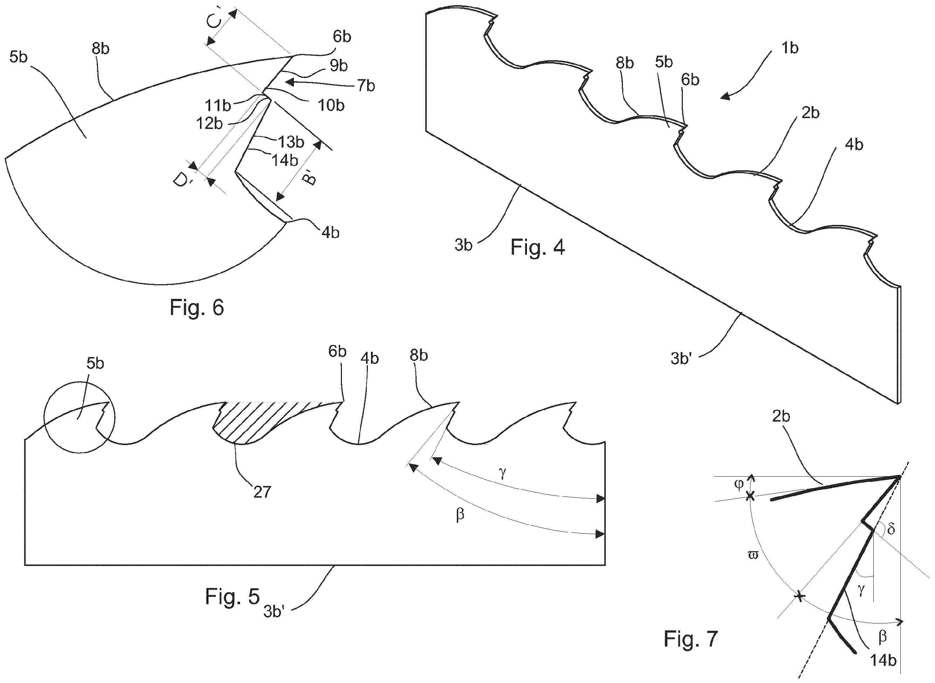

Figs. 4 - 7 show a first embodiment of a band saw blade 1b with a first embodiment of teeth 2b according to the present invention. This first embodiment of a band saw blade with the first embodiment of teeth 2b has the same main features as the winter teeth 2a described in relation to figs. 1, 2 and 3, and for like parts same reference numerals are used, except that the annotation "a" is substituted by the annotation "b".

The fragment of the band saw blade 1b seen in fig. 4 has five identical novel teeth 2b. The teeth 2b protrude from a saw blade base 3b having a saw blade base line 3b', and associated gullets 4b in-between said teeth 2b. The hatching in fig. 5 illustrates the volume that potentially can accommodate saw chips and saw dust during cutting.

As seen best in fig. 6 of the encircled tooth 2b in fig. 5, a tooth 2b of the present invention has, just as the winter tooth 2a described in relation to figs. 1, 2 and 3, a tip 5b, with a tooth back 8b, a free tip edge 6b, and an overall tooth face 7b. The free tip edge 6b at the top of the tooth face 7b extends into a first section 9b with a first tooth face part 10b. The first section 9b extends via an intermediate step 11b with an intermediate tooth face 12b into a second section 13b with a second tooth face part 14b, which second tooth face part 14b extends into an associated gullet 4b. The first section 9b, the intermediate step 11b and the second section 13b together expose the overall tooth face 7b. Further, the second tooth face part 14b is offset the first tooth face part 10b by the depth D' of the intermediate tooth face 12b of the intermediate step 11b, and the first tooth face part 9b has a height C' that is shorter than the height B' of the second tooth face part 14b.

The difference to the winter tooth 2a is illustrated best in fig. 7 that shows that the first tooth face part 9b has a positive first hook angle β,which is higher than the positive second hook angle γ of the second tooth face part 14b. Thus in contrast to the tooth face parts 9a;14a of the winter tooth 2a, the first tooth face part 9b and the second tooth face part 14b of the tooth 2b of the present invention are not parallel. The intermediate tooth face 12b of the intermediate step 12b, protrudes in this exemplary first embodiment of a tooth 2b according to the present invention at an angle δ substantially perpendicular from the first tooth face part 10b of the first section 9b. As the positive first hook angle β is higher than the positive second hook angle γ, said positive first hook angle β can be made even higher than hitherto practically possible without compromising the stability of the tooth 5b when it cuts. In the embodiment seen in figs. 7 the clearance angle φ is 10°, the sharpness angle ω is 40°, the first hook angle β is 40°, and the second hook angle γ is 27°.

First hook angles higher than 40° are contemplated within the scope of the present invention, such as e.g. >42°, >45° and even higher.

The first section 10b initially attacks the workpiece. As the first hook angle β is higher than the first hook angle α for the prior art embodiments of teeth the first tooth face part 10b is turned closer towards the gullet 4b than the corresponding first tooth face part 10 of the prior art teeth. The result is an improved efficient cutting effect. The initial cutting may be complemented by the cutting of the second section 13b, which cleans the cut through the wood. Any irregularities in the workpiece can be attacked and processed in a neat cutting operation by the same tooth 2b.

A high first hook angle β with increased length of the first tooth face part 10b locates the deepest point of the first tooth face part 10b deeper into the tip 5b than the corresponding deepest point of a conventional tooth 2a. The intermediate step 11b becomes substantially retracted from the free tip edge 6b and the first tooth face part 10b meets the workpiece substantially before the second tooth face part 13b enters the workpiece during cutting. The high first hook angle β decreases the required cutting force, reduces creation of frictional heat, and cutting requires less power consumption.

In the exemplary embodiment shown in figs. 4 - 7 the first tooth face part 10b has a height C', which is equal to its length, which is just 5 mm. The second tooth face part 14b has a length, which is higher than the length of the first tooth face part 10b. The short first section 9b provides a very strong and durable tooth 2b.

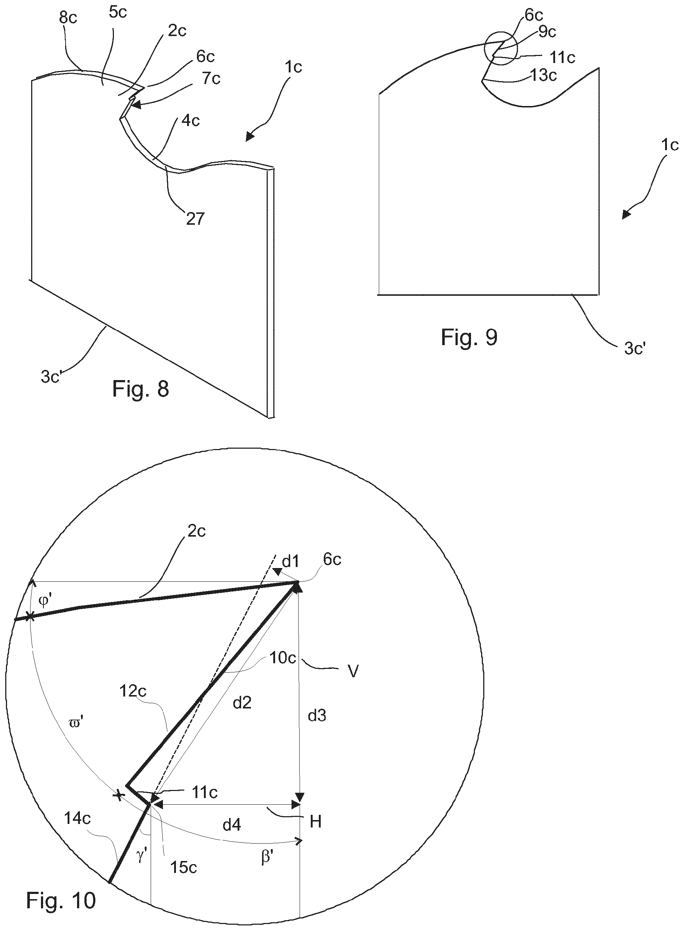

Figs. 8, 9 and 10 show a fragment of a second embodiment of a band saw blade 1c with a second embodiment of a tooth 2c according to the present invention.

The second embodiment of a band saw blade 1c with the second embodiment of teeth 2c is a modification of the first embodiment of teeth 2b of the first embodiment of a band saw blade 1b of the present invention. For like parts same reference numerals are used, except that the annotation "b" is substituted by the annotation "c".

The second embodiment of a band saw blade 1c has a saw blade base 3c with a saw blade base line 3c', teeth 2c and gullets 4c in-between said teeth 2c. The tip 5c has a first section 9c, one intermediate step 11c, and a second section 13c, which together expose a combined tooth face 7c.

The intermediate step 11c is retracted from the free tip edge 6c, and the free tip edge 6c leans more forward compared to most prior art cutting edges.

The first hook angle β'of the tooth 2c of the second embodiment of a band saw blade 1c is, as seen seen in fig. 10, higher than the first hook angle β of the tooth 2b of the first embodiment of a band saw blade 1b shown in fig. 7.

The second hook angle γ' of said tooth 2c seen in fig. 10 is substantially the same as the second hook angle γ of the previously discussed tooth 2b seen in fig. 7. The length of the respective second tooth face parts 14b,14c of said respective teeth 2b,2c are substantially the same for both teeth 2b,2c. The free tip edge 6c of the tooth 2c intersects the plane of the second tooth face part 14c, which plane is indicated in dotted line in fig. 10.

The forward lean of the first tooth face part 10c makes, as illustrated in fig. 10, the free tip edge 6c to protrude substantially beyond the plane of the second tooth face part 14c. Thus the free tip edge 6c of the tooth 2c of the second embodiment of a band saw blade 1c of the present invention protrudes substantially more beyond the intermediate tooth face 12c than known hitherto, thereby providing a novel tooth that requires even less cutting force and even less power than needed for the first embodiment of a tooth 2b. The fact that the first hook angle β' of the tooth 2c being higher than the first hook angle β of the tooth 2b also contributes to these improvements.

For this exemplary second embodiment of a tooth 2c the first hook angle β' is 40°, the second hook angle γ' is 27°, the clearance angle φ' is 8°, and the sharpness angle ω' is 42.

In contrast to the free tip edge 6c of the tooth 2c protruding dominantly, the free tip edge 6b of the tooth 2b seen in fig. 7 is set slightly back from, or is in, the plane of the second tooth face part 14b.

The enlarged scale view of fig. 10 shows an example of dimensions of the second embodiment of a tooth 2c of the present invention, which dimensions should not be construed as limiting. The free tip edge 6c extends beyond the plane of the second tooth face part 14c.

The distance d1 from the free tip edge 6c to the plane including the second tooth face part 14c, which plane is illustrated by the dotted line, is 0.528 mm. The distance from the free tip edge 6c to the exterior corner edge 15c of the second tooth face part 14c is indicated by d2;d2 being 4.541 mm. The length d3 of the line V perpendicular to the saw blade base line 3c' to the free corner edge 15c of the second tooth face part 14c is 3.779 mm. This perpendicular line V also defines the first hook angle β' of 40° towards the first tooth face part 10c. Accordingly, as calculated by the Pythagorean Theorem the horizontal distance d4 between the exterior corner edge 15c of the second tooth face part 14c and the line V is 2.518 mm.

The present second embodiment of a tooth 2c provides a first hook face 12c, which is deeply cut into the tip 5c, and a free tip edge 6c that protrudes substantially beyond the intermediate step 11c.

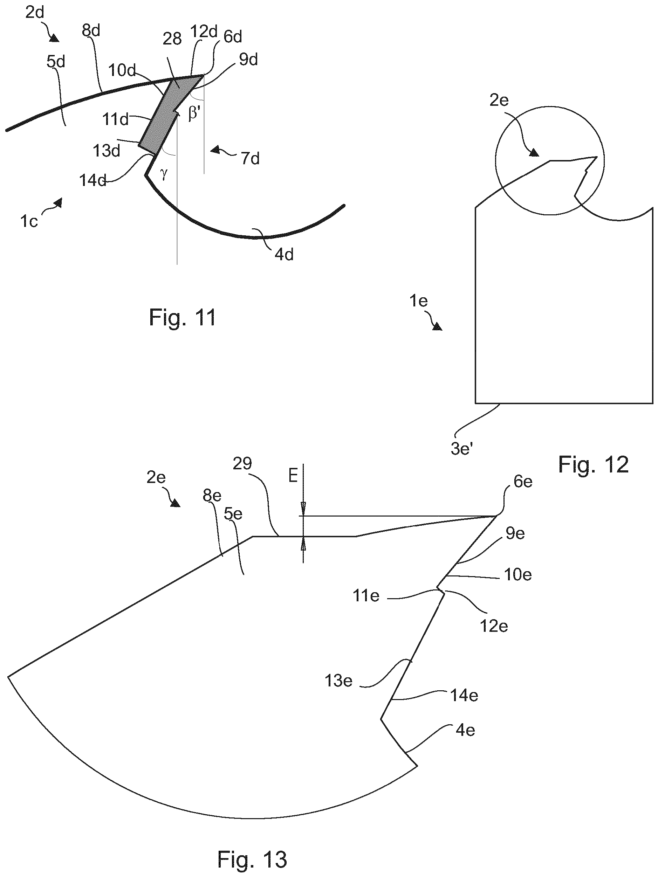

Fig. 11 illustrates the profile of a third embodiment of a tooth 2d, which is a modification of the second embodiment of a tooth 2c except that it has a hard material tipping 28, which replaces some of the steel of the tip 2d. For like parts the annotation "c" has been replaced with the annotation "d". The hard material tipping 28 extends a distance along the tooth back 8d and a distance along the tooth face 7d towards the gullet 4d, so that said hard material is exposed at the first section 9d, the intermediate step 11d, and a part of the second section 13d. Any of the embodiments of teeth of band saw blade described herein can have similar hard material tipping.

Fig. 12 shows a fourth embodiment of a band saw blade 1e with a fourth embodiment of a tooth 2e of the present invention, which tooth 2e, is yet a modification of the second embodiment of a tooth 2c. For like parts the annotation "c" has been replaced with the annotation "e". The fourth embodiment of a tooth 2e differs only in that the tooth back 8e has a plateau 29 spaced from the free tip edge 6e. The plateau 29 is located a distance E below a line parallel to the saw blade base line 3e' of the band saw blade 1e and extends through the free tip edge 6e, as seen best in the enlarged scale view of fig. 13 of the encircled detail seen in fig. 12.

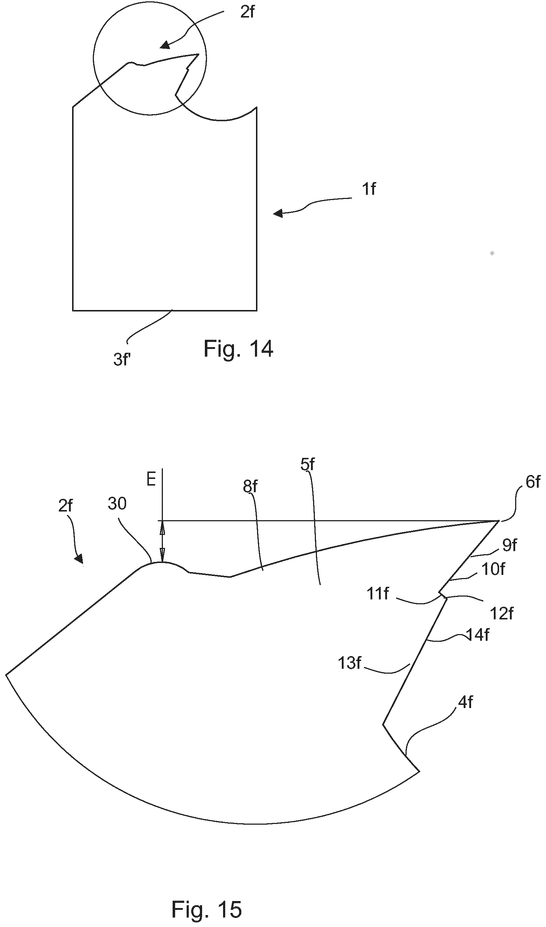

Figs. 14 and 15 show a fifth embodiment of band saw blade 1f with a fifth embodiment of a tooth 2f of the present invention, which tooth 2f is yet a modification of the second embodiment of a tooth 2c. For like parts the annotation "c" has been replaced with the annotation "f". The fifth embodiment of a tooth 2f differs in that the tooth back 8e has an upright protrusion 30 spaced from the free tip edge 6f. The apex of the upright protrusion 30 is located a distance E' below a line parallel to the saw blade base line 3f' of the band saw blade 1f and extends through the free tip edge 6f.

The plateau 29 and the upright protrusion serves as a "cut per tooth limiter" that prevents the teeth 2e;2f from pulling the workpiece, such as timber, uncontrolled into the band saw blade and therefore keeps the cutting process stable when cutting with high hook angles.

Emphasis is made than any of the teeth described herein can be provided with a similar "cut per tooth limiter" at its tooth back. The distance to the free tip edge 6e;6f and the height of the "cut per tooth limiter", thus of the upright protrusion 30 and of the position of the plateau 29, can vary according to need and intended use of the band saw blades.

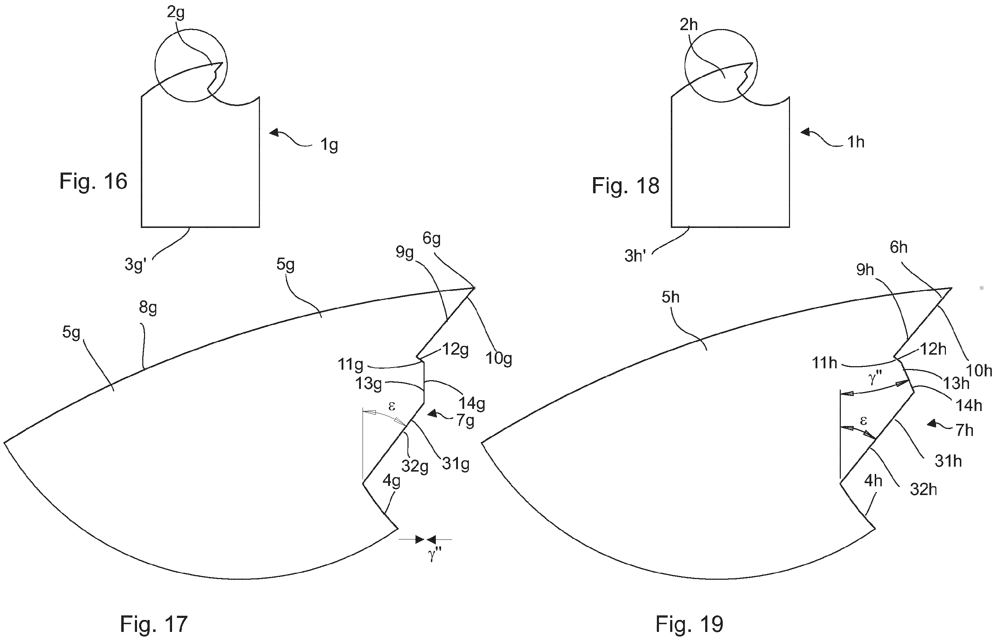

Fig. 16 shows schematically a fragment of a sixth embodiment a band saw blade 1g with a sixth embodiment of a tooth 2g of the present invention. The sixth embodiment of a tooth 2g is yet a modification of the second embodiment of a tooth 2c. For like parts the annotation "c" has been replaced with the annotation "g". Fig. 17 is an enlarged scale view of the encircled fragment of the sixth embodiment of a band saw blade 1g seen in fig. 16.

In the sixth embodiment of a tooth 2g the second tooth face part 14g of the second section 13g is perpendicular to the saw blade base line 3g', so that the second hook angle γ" is zero.

The first hook angle is β', the clearance angle φ', and the sharpness angle ω' are the same (see fig. 10) as for the second embodiment of a tooth 2c, however said angles may be different. The intermediate tooth face 12g protrudes, in the current example, at an interior angle δ (see fig. 7) substantially perpendicular from the first tooth face part 10g of the first section 9g, but other angles δ, in particular larger, are within the scope of the present invention.

The second section 13g extends into a third section 31g with a third tooth face 32g arranged at a third hook angle ε. The third section 31g extends into the gullet 4g. The third tooth face 32g is part of the tooth face 7g.

Fig. 18 shows schematically the profile of a seventh embodiment of a band saw blade 1h with a seventh embodiment of a tooth 2h according to the present invention, and fig. 19 shows, in an enlarged scale view, the encircled fragment of the seventh embodiment of a band saw blade 1h seen in fig. 18. The seventh embodiment of a tooth 2h is a modification of the sixth embodiment of a tooth 2g. For like parts the annotation "g" has been replaced with the annotation "h".

The seventh embodiment of a tooth 2h differs from the sixth embodiment of a tooth 2g in that the second section 13h has a negative second hook angle γ''. Thus the second tooth face part 14h has a backward lean, e.g. a lean of similar size as the lean of the second hook angle γ of the second embodiment of a tooth 2c, but negative. The second section 13h extends into a third section 31h with a third tooth face 32h arranged at a third hook angle ε. The second section 13h extends into the gullet 4h. The third tooth face 32h is part of the tooth face 7h.

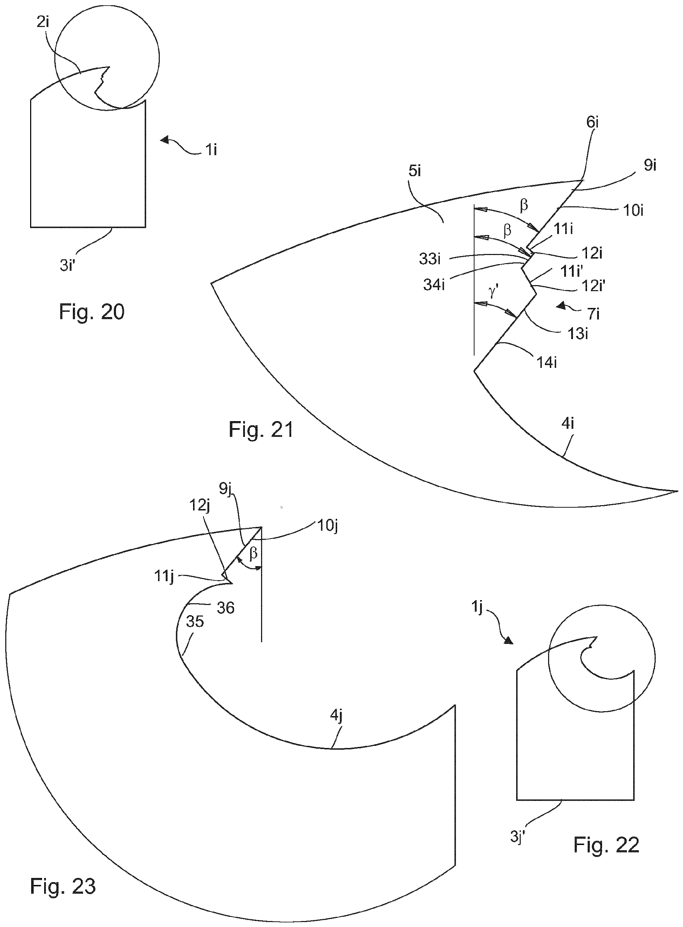

Fig. 20 shows schematically a fragment of an eight embodiment of a band saw blade 1i with an eight embodiment of a tooth 2i according to the present invention. Fig. 21 shows, in an enlarged scale view, the encircled fragment of the eight embodiment of a band saw blade 1i seen in fig. 20. The eight embodiment of a tooth 2i is a modification of the second embodiment of a tooth 2c. For like parts the annotation "c" has been replaced with the annotation "i".

The eight embodiment of a tooth 2i differs from the second embodiment of a tooth 2c in that it has a sequence of two intermediate steps, a first intermediate step 11i and a second intermediate step 11i', between the first section 9i and the second section 13i. The first intermediate step 11i extends at a substantially right interior first angle from the first section 9i, and then bends at an exterior right first angle into a middle section 33i, having a middle tooth face part 34i that is parallel to the first tooth face part 10i. Accordingly the middle tooth face part 34i and the first tooth face part 10i both have the same first hook angle β'. The middle section 33i extends via an interior blunt second angle into the second intermediate step 11i', whereby the second intermediate step 11i' gets a negative hook angle. The second intermediate step 11i' extends via an exterior blunt second angle into the second section 13i that has the second hook angle γ'. The second section 13i extends into the gullet 4i.

The first tooth face part 10i, the second tooth face part 14i, the first intermediate tooth face part 12i of the first intermediate step 11i, and the second intermediate tooth face 12i' of the second intermediate step 11i' may, or may not, all be part of the cutting zone, which cutting zone may extend about 10 mm from the free edge tip 6i.

Fig. 22 shows schematically, in a side view, a fragment of a ninth embodiment of a band saw blade 1j with a ninth embodiment of a tooth 2j according to the present invention. Fig. 23 is an enlarged scale view of the encircled fragment of the ninth embodiment of a tooth 2j seen in fig. 22. The ninth embodiment of a tooth 2j has some parts that resemble some parts of the second embodiment of a tooth 2c, and for like parts same reference numerals are used except that the annotation "j" has been replaced with the annotation "c".

The first tooth face part 10j of the tooth 2j has a first hook angle β'. Said first tooth face part 10j extends via an intermediate step 11j at right interior angle into a curved second tooth face part 35 that defines a cavity 36 that undercuts the first tooth face part 10j and proceeds into the gullet 4j. The degree of undercut may vary within the scope of the present invention, e.g. in view of the first hook angle, the length of the first section and the purpose of the band saw.

A corresponding undercut can be provided in extension of the second section.

The present invention does encompass embodiments and variations of teeth where the first and second hook angle, the lengths of the first tooth face part, of the intermediate tooth face, and of the second tooth face part can differ from the exemplary configurations discussed above and shown in the figures. Thus within the scope of the present invention the figures should not be seen as limiting, and modifications of the shown and discussed tooth profiles are encompassed.

## Claims

1. A band saw blade (1b;1c;1d;1e;1f;1g;1h;1i;1j) comprising a plurality of spaced apart teeth (2b;2c;2d;2e;2f;2g,2h,2i,2j), wherein
a tooth (2b;2c;2d;2e;2f;2g) of the band saw blade (1b;1c;1d;1e;1f;1g;1h;1i;1j) comprises
- a tip (5b;5c;5d,5e;5f;5g;5h;5i;5j) with a free tip edge (6b;6c;6d;6e;6f;6g;6h;6i;6j), and a tooth face (7b;7c;7d;7e;7f;7g;7h;7i:7j), which tip (5b;5c;5d;5e;5f;5g;5h;5i;5j) extends via a gullet (4b;4c;4d;4e;4f;4g;4h;4i;4j) into a tooth back (8b;8c;8d;8e;8f;8g;8h;8i;8j) of the subsequent tooth (2b;2c;2d;2e;2f;2g;2h;2i;2j),
- the tip (5b;5c;5d;5e;5f;5g;5h;5i;5j) comprises a first section (9b;9c;9d;9e;9f;9g;9h;9i;9j) with a first tooth face part (10b;10c;10d;10e;10f;10g;10h;10i,10j) of the tooth face (7b;7c;7d;7e;7f;7g;7h;7i;7j), and a second section (13b;13c;13d;13e;13f;13g;13h;13i;13j) with a second tooth face part (14b;14c;14d;14e;14f;14g;14h;14i;14j) of the tooth face (7b;7c;7d;7e;7f;7g;7h;7i:7j),
**characterised in that**
- the first tooth face part (10b;10c;10d;10e;10f;10g;10h;10i) has a first hook angle (β;β'), and the second tooth face part (14b;14c;14d;14e;14f;14g;14h;14i) has a second hook angle (γ;γ' ; γ"), which second hook angle (γ;γ' , γ") is different from the first hook angle (β;β'), or
- the first tooth face part (10j) has a first hook angle (β;β'), and the second tooth face part (35) has a curvature that at least partly undercuts the first tooth face part (10j).

2. A band saw blade (1b;1c;1d;1e;1f;1g;1h;1i;1j) according to claim 1, **characterised in that** the second tooth face part (14b;14c;14d;14e;14f;14g) and the first tooth face part (10b;10c;10d;10d;10f;10g) are offset each other by at least one intermediate step (11b;11c;11d;11e;11f;11g;11h;11i;11j;11j').

3. A band saw blade (1b;1c;1d;1e;1f;1g;1h;1i;1j) according to any of claims 1 or 2, **characterised in that** the tip (5b;5c;5d;5e;5f;5g;5h;5i;5j) comprises more than one intermediate step (11b;11c;11d;11e;11f;11g;11h;11i;11j;11j') in extended sequence in-between the first section (9b;9c;9d;9e;9f;9g;9h;9i;9j) and the second section (13b;13c;13d;13e;13f;13g;13h;13i;13j).

4. A band saw blade (1b;1c;1d;1e;1f;1g;1h;1i;1j) according to any of claims 2 or 3, **characterised in that** the number of intermediate steps is at least 2, 3, 4, 5, or 6, wherein the intermediate steps have same or different angling.

5. A band saw blade (1b;1c;1d;1e;1f;1g;1h;1i) according to any of the preceding claims 1 - 4, **characterised in that** the first tooth face part (10b;10c;10d;10e;10f;10g;10h;10i) has a positive first hook angle (β;β'), and the second tooth face part (14b;14c;14d;14e;14f;14g;14h;14i) has a positive second hook angle (γ;γ'), wherein the positive first hook angle (β;β') is higher than the positive second hook angle (γ;γ').

6. A band saw blade (1g;1h) according to any of the preceding claims 1 - 4, **characterised in that** the first tooth face part (10g;10h) has a positive first hook angle (β;β'), and the second tooth face part (14g;14g) has a zero or negative second hook angle (γ").

7. A band saw blade (1b;1c;1d;1e;1f;1g;1h;1i) according to any of the preceding claims 2 - 6, **characterised in that** the at least one intermediate step extends into a third section (31g) having a positive third hook angle (ε).

8. A band saw blade (1b;1c;1d;1e;1f;1g;1h;1i) according to any of the preceding claims, **characterised in that** the free tip edge (6b;6c;6d;6e;6f;6g;6h;6i) is arranged protruding beyond, or is in, the plane of the second tooth face part (14b;14c;14d;14e;14f;14g;14h;14i) seen in a cutting direction of the band saw blade

9. A band saw blade (1b;1c;1d;1e;1f;1g;1h;1i;1j) according to any of the preceding claims, **characterised in that** the tooth back (8b;8c;8d;8e;8f;8g;8h;8i;8j) has an upright protrusion (30) or a plateau (29) spaced from the free tip edge (6b;6c;6d;6e;6f;6g;6h;6i;6j).

10. A band saw blade (1b;1c;1d;1e;1f;1g;1h;1i;1j) according to any of the preceding claims, **characterised in that** the teeth (2b;2c;2d;2e;2f;2g;2h;2i;2j) of the band saw blade (1b;1c;1d;1e;1f;1g;1h;1i;1j comprise that the tip (5b;5c;5d;5e;5f;5g;5h;5i;5j of the tooth (2b;2c;2d;2e;2f;2g;2h;2i;2j) has a hard material tipping (28) .

11. A band saw blade (1b;1c;1d;1e;1f;1g;1h;1i;1j) according to any of the preceding claims, **characterised in that** one or more of the teeth (2b;2c;2d;2e;2f;2g;2h;2i;2j) has/have same or different lateral angling.

12. A band saw blade (1b;1c;1d;1e;1f;1g;1h;1i;1j) according to any of the preceding claims, **characterised in that** the teeth (2b;2c;2d;2e;2f;2g;2h;2i;2j) of the band saw blade (1b;1c;1d;1e;1f;1g;1h;1i;1j) are of the same kind or are composed of different kinds of teeth (2b;2c;2d;2e;2f;2g;2h;2i;2j).

13. A band saw blade (1b;1c;1d;1e;1f;1g;1h;1i;1j) according to any of the preceding claims, **characterised in that** the first hook angle (β;β') is higher than 40°.

14. A method of profile sharpening the teeth of the band saw blade (1b;1c;1d;1e;1f;1g;1h;1i;1j) according to any of the preceding claims, **characterised in that** the method comprises
- providing a grinding tool having at least one grinding head configured with a grinding profile with at least one grinding surface part,
- arranging a rotation axis of the at least one grinding head at an angle ≥ 0 in relation to a base line of the band saw blade,
- selecting an insertion direction of the grinding head, which insertion direction provides an insertion angle of the grinding head in relation to a line perpendicular to the base line of the band saw blade, which insertion angle is different from at least one hook angle of the tooth face of the at least one tooth to be ground and/or obtained, and displacing the at least one grinding head, either along the insertion direction or perpendicular to the width of the band saw blade, into a space between two adjacent teeth of the band saw blade to achieve a grinding start position, and
- operating the grinding tool to grind at least the tooth face of the at least one tooth by continuously displacing the grinding head in the insertion direction.

15. A method of profile sharpening the teeth of the band saw blade (1b;1c;1d;1e;1f;1g;1h;1i;1j) according to claim 14, **characterised in that** the method comprises that step c) comprises the partial steps of:
c1) inserting the at least one grinding head in a closest non-grinding contact with the at least one tooth to be ground, and
c2) advancing the at least one grinding head further in the insertion direction to apply a grinding force to the tooth face.
